# EUROPEAN PATENT SPECIFICATION

(11) **EP 3 528 376 B1**
(45) Date of publication and mention of the grant of the patent: **01.06.2022**
(21) Application number: 16918990.9
(22) Date of filing: 13.10.2016
(51) Int. Cl.: H02M 3/00, H01R 13/02, H02M 3/158, H02M 3/07, H02J 1/12, H02J 7/00, H02M 1/14

(54) **POWER CONNECTION DEVICE AND POWER CONTROL SYSTEM**
STROMSCHLUSSVORRICHTUNG UND STROMSTEUERUNGSSYSTEM
DISPOSITIF DE CONNEXION DE SOURCE D'ÉNERGIE ET SYSTÈME DE COMMANDE DE PUISSANCE

(43) Date of publication of application: 21.08.2019
(73) Proprietor: Shenzhen Immotor Technology Co., Ltd., Shenzhen, Guangdong 518000 (CN)
(72) Inventor: LUO, Jianfeng, Shenzhen Guangdong 518000 (CN); PAN, Jianghong, Shenzhen Guangdong 518000 (CN); XU, Jing, Shenzhen Guangdong 518000 (CN); JIANG, Xufeng, Shenzhen Guangdong 518000 (CN); HUANG, Jiaxi, Shenzhen Guangdong 518000 (CN)
(74) Representative: Franco Martegani S.r.l.
(86) International application number: PCT/CN2016/102061
(87) International publication number: WO 2018/068278

(56) References cited:
- CN-A- 101 917 121
- CN-A- 102 594 128
- CN-A- 103 138 574
- CN-A- 103 199 694
- CN-A- 103 199 694
- CN-A- 104 701 913
- CN-A- 105 703 618
- CN-A- 105 703 618
- CN-U- 202 535 268
- CN-U- 202 616 856
- US-A- 5 373 195
- US-A1- 2008 258 685
- CHIH-CHIANG HUA A ET AL: "Design of a wide input range DC/DC converter based on SEPIC topology for fuel cell power conversion", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21 June 2010 (2010-06-21), pages 311-316, XP031727745, ISBN: 978-1-4244-5394-8

## Description

### TECHNICAL FIELD

The present invention relates to the technical field of electric circuits, and more particularly to a power connection device and a power control system.

### BACKGROUND

With the enhancement of environment protection awareness of the people, clean energy begins to be used by more and more energy consuming products. For example, an electric vehicle, an aircraft and the like are powered by storage batteries. Wherein, D1(Pub. No.: CN103199694) discloses a switching power supply with an automatic current sharing function, which belongs to the technical field of aerospace power supplies. The switching power supply comprises a battery I, a battery II, a diode D1, a diode D2, a DC/ DC module I, a DC/ DC module II and a current sharing module. The battery I is connected with the battery II in parallel to supply electricity to the DC/ DC module I and the DC/ DC module II, the DC/ DC modules are connected in parallel to supply the electricity to a load after a current sharing process is performed on the DC/ DC modules, a dual-redundancy structure is adopted, space equipment requirements for space weight are met, and the requirements on safety and reliability of the power system are met. A current sharing chip UC 1902 is adopted in the current sharing module to balance the DC /DC module I and the DC/ DC module II, the equivalent current load is imposed on each DC/ DC module, so that the reliability and the safety of aircraft electric power supply are improved. D2 (CN101917121A1) discloses an active clamp synchronous rectification forward converter,which belongs to the technical field of electronics. The converter comprises a direct current input power supply, an input capacitor, a main transformer T1, a synchronous rectifier circuit, a filter circuit, a voltage sampling circuit, an optical coupling feedback circuit, a PWM control circuit and an active clamp circuit; the synchronous rectifier circuit is consisted of a rectifier tube and a driving circuit thereof, and a freewheeling tube and a driving circuit thereof, wherein the driving voltage of the rectifying tube is generated by a secondary auxiliary winding of the main transformer, and has the same phase as that of a first switching tube of the active clamp circuit; and the driving voltage of the freewheeling tube is generated by coupling the driving voltage of a second switching tube in the active clamp circuit, so that the driving voltage has the same phase as that of the second switching tube in the active clamp circuit. The synchronous rectifier circuit of the forward converter adopted the fixed driving voltage, has the dead zone time same as the active clamp circuit, and can improve the conversion efficiency and reduce the loss of the active clamp synchronous rectification forward converter. However, in actual research and development process, when a new power consuming product is designed or optimized, a power supply which is safe and reliable for the use of the new power consuming product also needs to be taken into consideration simultaneously. In other words, when each power consuming product is designed, a power supply matching with the power consuming product also needs to be designed by a researcher at the same time, and a lot of tests including safety performance, duration performance and the like also need to be performed on the power supply, which directly causes the development cycle of a product to be long, and that the popularization of the product is disadvantageous.

### TECHNICAL PROBLEM

The objective of the present invention is to provide a power connection device and a power control system, which aims at solving a problem in the related art that when a new product is developed, it also needs to design a power supply matching with the design of the new product, which further causes the development cycle to be long.

### TECHNICAL SOLUTION

The objective of the present invention is to provide a power connection device which includes a plurality of battery slots configured to be connected with a storage battery, each battery slot is provided therein with a control circuit, an input of the control circuit is adapted to be connected with a power terminal of the storage battery, an output of the control circuit is adapted to be connected with a load, the control circuit comprises a filtering module, a voltage dropping module and a current equalizing module; wherein the current equalizing module comprises a first input and a second input;
a first end of the filtering module is the input of the control circuit, a second end of the filtering module is grounded, a third end of the filtering module is connected with an input of the voltage dropping module, an output of the voltage dropping module is connected with the first input of the current equalizing module, and an output of the current equalizing module is the output of the control circuit;
when storage batteries are connected in at least two battery slots, the filtering module in each control circuit is configured to filter output direct current of the corresponding storage battery, and output a first direct current to the voltage dropping module, the voltage dropping module is configured to perform voltage dropping processing on the first direct current and output a second direct current to the current equalizing module, the current equalizing module in each control circuit is configured to generate a target voltage according to the second direct currents in all control circuits and adjust the output voltage according to the target voltage so as to output the same supply current to the load;
the voltage dropping module includes a control unit and a voltage dropping unit;
a power terminal of the voltage dropping unit is connected with a voltage input of the control unit, a first controlled terminal and a second controlled terminal of the voltage dropping unit are respectively connected with a first control output and a second control output of the control unit, an input of the voltage dropping unit is an input of the voltage dropping module, and an output of the voltage dropping unit is an output of the voltage dropping module; and wherein, the current equalizing module includes a sampling unit and an adjustment and outputting unit, and the adjustment and outputting unit comprises a first input and a second input;
an input of the sampling unit is the first input of the current equalizing module, an output of the sampling unit is connected with a first input of the adjustment and outputting unit, and a second input of the adjustment and output unit is the second input of the current equalizing module;
the filtering module comprises a first capacitor, a second capacitor, a third capacitor, a fourth capacitor, a fifth capacitor and a first inductance;
a first end of the first capacitor and a first end of the second capacitor are commonly connected with a first end of the third capacitor so as to constitute the first end of the filtering module, a first end of the first inductance is connected with a first end of the third capacitor, a second end of the first capacitor, a second end of the second capacitor and a second end of the third capacitor are commonly connected with a second end of the first inductance, a first end of the fourth capacitor and a first end of the fifth capacitor are commonly connected with a third end of the first inductance, the third end of the first inductance is the third end of the filtering module, a second end of the fourth capacitor and a second end of the fifth capacitor are commonly connected with a fourth end of the first inductance, and the fourth end of the first inductance is the second end of the filtering module.

Furthermore, the voltage dropping unit includes a sixth capacitor, a seventh capacitor, an eighth capacitor, a ninth capacitor, a tenth capacitor, a first resistance, a second resistance, a third resistance, a fourth resistance, a fifth resistance, a sixth resistance, a seventh resistance, an eighth resistance, a ninth resistance, a second inductance, a first diode, a second diode, a third diode, a first switching transistor, a second switching transistor, a third switching transistor and a fourth switching transistor;
where a first end of the sixth capacitor and a first end of the first diode are commonly connected with a high potential side of the first switching transistor, a second end of the sixth capacitor is connected with a first end of the first resistance, a second end of the first resistance and the second end of the first diode are commonly connected with a low potential side of the first switching transistor, the high potential side of the first switching transistor, a high potential side of the second switching transistor and a first end of the second diode are commonly connected with a first end of the seventh capacitor, and the first end of the seventh capacitor is the input of the voltage dropping unit, a second end of the seventh capacitor is grounded, a second end of the second diode is connected with a first end of the fourth resistance, a second end of the fourth resistance is connected with a first end of the eighth capacitor, and a second end of the eighth capacitor is grounded, the first end of the eighth capacitor is the power terminal of the voltage dropping unit, the low potential side of the first switching transistor and a low potential side of the second switching transistor are commonly connected with a high potential side of the third switching transistor, a controlled terminal of the first switching transistor is connected with a first end of the third resistance, and a controlled terminal of the second switching transistor is connected with a first end of the second resistance, a second end of the second resistance is connected with a second end of the third resistance so as to constitute the first controlled terminal of the voltage dropping unit, a controlled terminal of the third switching transistor is connected with a first end of the fifth resistance, and a second end of the fifth resistance is the second controlled terminal of the voltage dropping unit, a high potential side of the fourth switching transistor is connected with the high potential side of the third switching transistor, a controlled terminal of the fourth switching transistor is connected with a first end of the sixth resistance, a second end of the sixth resistance is connected with the second end of the fifth resistance, a low potential side of the fourth switching transistor and a low potential side of the third switching transistor are commonly connected with a first end of the seventh resistance, and a second end of the seventh resistance is grounded, a first end of the third diode is connected with the high potential side of the fourth switching transistor, a second end of the third diode and the low potential side of the fourth switching transistor are commonly connected with a first end of the eighth resistance, and a second end of the eighth resistance is grounded, a first end of the ninth capacitor and a first end of the second inductance are commonly connected with the first end of the third diode, the second end of the ninth capacitor is connected with the first end of the ninth resistance, and a second end of the ninth resistance is grounded, a second end of the second inductance is connected with a first end of the tenth capacitor so as to constitute the output of the voltage dropping unit, and a second end of the tenth capacitor is grounded.

Furthermore, the sampling unit includes a first sampling resistance, a second sampling resistance and a first chip;
where a first end of the first sampling resistance is connected with a first end of the second sampling resistance, a second end of the first sampling resistance is connected with a second end of the second sampling resistance, a first voltage signal input of the first chip is connected with the first end of the first sampling resistance, a second voltage signal input of the first chip is connected with the second end of the first sampling resistance, a reference voltage terminal of the first chip is grounded, and a voltage signal output of the first chip is connected with the first end of the tenth resistance, and the second end of the tenth resistance is the output of the sampling unit.

Furthermore, each of the first switching transistor, the second switching transistor, the third switching transistor and the fourth switching transistor is a triode, an MOS transistor or an IGBT transistor.

Furthermore, each of the first switching transistor, the second switching transistor, the third switching transistor, and the fourth switching transistor is an IGBT transistor having a body diode.

Another objective of the present invention is to provide a power control system which includes a storage battery, the power control system further includes a power connection device as mentioned above.

### ADVANTAGEOUS EFFECTS

The present invention provides a power connection device which includes a plurality of battery slots configured to be connected with a storage battery, each battery slot is provided therein with a control circuit, an input of the control circuit is connected with a power terminal of the storage battery, and an output of the control circuit is connected with a load, the control circuit includes a filtering module, a voltage dropping module and a current equalizing module; where the current equalizing module includes a plurality of inputs; when the storage battery is connected in at least two battery slots, the direct current as output by the corresponding storage battery is filtered by the filtering module in each control circuit, and the first direct current is output to the voltage dropping module, a voltage dropping processing is performed on the first direct current by the voltage dropping module and the second direct current is output to the current equalizing module, the target voltage is generated by the current equalizing module in each control circuit according to the second direct currents in all control circuits, and the output voltage is adjusted by the current equalizing module in each control circuit according to the target voltage, so that the same supply current is output to the load. In this way, the output power of the power supply can be controlled by increasing or decreasing the number of the storage batteries on the power connection device when power consuming products with different power are provided with power supply, so that the research and development cycle of the product is further reduced.

### BRIEF DESCRIPTION OF THE DRAWINGS

FIG. 1 depicts a schematic structural block diagram of a power connection device provided by an embodiment of the present invention;
FIG. 2 depicts a detailed circuit diagram of a filtering module in the power connection device provided by the embodiment of the present invention;
FIG. 3 depicts a detailed circuit diagram of a voltage dropping module in the power connection device provided by the embodiment of the present invention;
FIG. 4 depicts a detailed circuit diagram of a sampling unit in the power connection device provided by the embodiment of the present invention; and
FIG. 5 depicts a schematic structural block diagram of a power control system provided by an embodiment of the present invention.

### DESCRIPTION OF THE EMBODIMENTS

The objective of the present invention is to provide a power connection device and a power control system, which aims at solving a problem in the related art that when a new product is developed, it also needs to design a power supply matching with the design of the new product, which causes the development cycle to be long correspondingly.

This embodiment provides a power connection device, which includes a plurality of battery slots configured to be connected with storage batteries, it needs to be noted that, the storage batteries connected in each battery slot can be the same storage batteries or be different storage batteries, that is, the various specification parameters of the storage batteries can be different.

In order to describe the technical solutions provided by the embodiment of the present invention, the technical solutions are described by the following specific embodiments below.

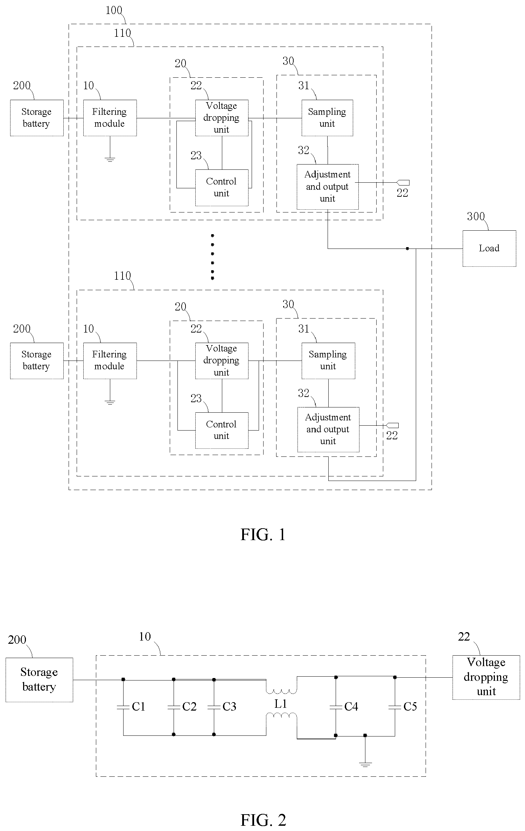

FIG. 1 depicts a structure of a power connection device according to the embodiment of the present invention, as shown in FIG. 1, a power connection device 100 includes a plurality of battery slots configured to be connected with storage batteries 200, each battery slot is provided therein with a control circuit 110, an input of the control circuit 110 is connected with a power terminal of each storage battery 200, and an output of the control circuit 110 is connected with a load 300; the control circuit 110 includes a filtering module 10, a voltage dropping module 20 and a current equalizing module 30; where the current equalizing module 30 includes a first input and a second input.

A first end of the filtering module 10 is the input of the control circuit 110, a second end of the filtering module 10 is grounded, and a third end of the filtering module 10 is connected with an input of the voltage dropping module 20, an output of the voltage dropping module 20 is connected with the first input of the current equalizing module 30, and an output of the current equalizing module 30 is the output of the control circuit 110.

When the storage batteries 200 are connected in at least two battery slots, the filtering module 10 in each control circuit 110 filters an output direct current of the corresponding storage battery 200 and outputs a first direct current to the voltage dropping module 20, the voltage dropping module 20 performs a voltage dropping processing on the first direct current and outputs a second direct current to the current equalizing module 30, the current equalizing module 30 in each control circuit 110 generates a target voltage according to the second direct current in each control circuit 110 and adjusts an output voltage according to the target voltage so as to output the same supply current to the load 300.

It needs to be noted that, the control circuits 110 refer to the corresponding control circuits 110 in the plurality of battery slots which are connected with the storage batteries 200. The first direct current is the output direct current of the storage battery 200 filtered by the filtering module 10, the voltage dropping module 20 drops the voltage of the first direct current and outputs the second direct current to the current equalizing module 30. The current equalizing module 30 includes a plurality of inputs, where the first input of the current equalizing module 30 is connected with an output of the voltage dropping module 20, and other inputs of the current equalizing module 30 are configured to sample the second direct current in other control circuits 110.

The current equalizing module 30 obtains the target voltage by comparing the second direct current in each control circuit 110, and the target voltage is the voltage of the second direct current with the largest voltage value in all control circuits 110.

Further, as shown in FIG. 1, the voltage dropping module 20 in this embodiment includes a control unit 23 and a voltage dropping unit 22.

A power terminal of the voltage dropping unit 22 is connected with a voltage input of the control unit 23, a first controlled terminal and a second controlled terminal of the voltage dropping unit 22 are respectively connected with a first control output and a second control output of the control unit 23, an input of the voltage dropping unit 22 is the input of the voltage dropping module 20, and an output of the voltage dropping unit 22 is the output of the voltage dropping module 20.

As shown in FIG. 1, the current equalizing module 30 includes a sampling unit 31 and an adjustment and output unit 32; where the adjustment and output unit 32 includes a first input and a second input;

An input of the sampling unit 31 is the first input of the current equalizing module 30, an output of the sampling unit 31 is connected with the first input of the adjustment and output unit 32, the second input of the adjustment and output unit 32 is the second input of the current equalizing module 30.

It needs to be noted that, a voltage as input by the storage battery 200 is filtered by the filtering module 10, the first direct current is sent to the voltage dropping unit 22, the voltage dropping unit 22 is controlled by the control unit 23 to perform a voltage dropping process on the first direct current, the first direct current after voltage dropping is sampled and amplified by the sampling unit 31, a second direct current is obtained and is sent to the adjustment and output unit 32, the second direct currents in all control circuits 110 are sampled and compared by the adjustment and output unit 32 through a second input thereof, and then the target voltage is obtained.

FIG. 2 depicts a specific circuit diagram of the filtering module 10 in a power connection device according to an embodiment of the present invention, as shown in FIG. 2, the filtering module 10 includes a first capacitor C1, a second capacitor C2, a third capacitor C3, a fourth capacitor C4, a fifth capacitor C5 and a first inductance L1.

A first end of the first capacitor C1 and a first end of the second capacitor C2 are commonly connected with a first end of the third capacitor c3 so as to constitute the first end of the filtering module 10, a first end of the first inductance L1 is connected with a first end of the third capacitor C3, a second end of the first capacitor C1, a second end of the second capacitor C2 and a second end of the third capacitor C2 are commonly connected with a second end of the first inductance L1, a first end of the fourth capacitor C4 and a first end of the fifth capacitor C5 are commonly connected with a third end of the first inductance L1, the third end of the first inductance L1 is the third end of the filtering module 10, a second end of the fourth capacitor C4 and a second end of the fifth capacitor C5 are commonly connected with a fourth end of the first inductance L1, and the fourth end of the first inductance L1 is the second end of the filtering module 10.

It needs to be noted that, the first capacitor C1, the second capacitor C2, the third capacitor C3, the fourth capacitor C4 and the fifth capacitor C5 are used for differential mode rejection, and the first inductance L1 is used for common mode rejection.

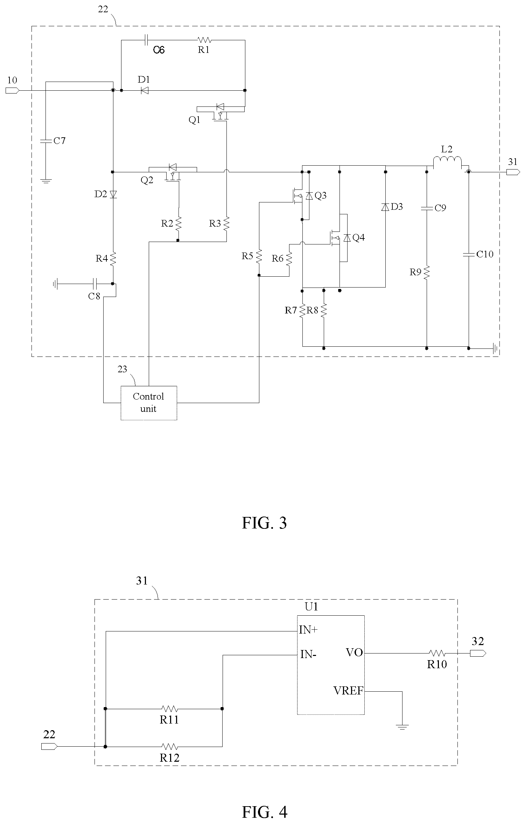

FIG. 3 depicts a specific circuit diagram of a voltage dropping module in a power connection device provided by the embodiment of the present invention, as shown in FIG. 3, the voltage dropping unit 22 includes a sixth capacitor C6, a seventh capacitor C7, an eighth capacitor C8 and a ninth capacitor C9, a tenth capacitor C10, a first resistor R1, a second resistor R2 and a third resistor R3, a fourth resistor R4, a fifth resistor R5 and a sixth resistor R6, a seventh resistor R7, an eighth resistor R8, a ninth resistor R9, a second inductance L2, a first diode D1, a second diode D2, a third diode D3, a first switching transistor Q1, a second switching transistor Q2, a third switching transistor Q3 and a fourth switching transistor Q4.
a first end of the sixth capacitor C6 and a first end of the first diode D1 are commonly connected with a high potential side of the first switching transistor Q1, a second end of the sixth capacitor C6 is connected with a first end of the first resistance R1, a second end of the first resistance R1 and the second end of the first diode D1 are commonly connected with a low potential side of the first switching transistor Q1, the high potential side of the first switching transistor Q1, a high potential side of the second switching transistor Q2 and a first end of the second diode D2 are commonly connected with a first end of the seventh capacitor C7, and the first end of the seventh capacitor C7 is the input of the voltage dropping unit 22, a second end of the seventh capacitor C7 is grounded, a second end of the second diode D2 is connected with a first end of the fourth resistance R4, a second end of the fourth resistance R4 is connected with a first end of the eighth capacitor C7, and a second end of the eighth capacitor C8 is grounded, the first end of the eighth capacitor C8 is the power terminal of the voltage dropping unit 22, the low potential side of the first switching transistor Q1 and a low potential side of the second switching transistor Q2 are commonly connected with a high potential side of the third switching transistor Q3, a controlled terminal of the first switching transistor Q1 is connected with a first end of the third resistance R3, and a controlled terminal of the second switching transistor Q2 is connected with a first end of the second resistance R2, a second end of the second resistance R2 is connected with a second end of the third resistance R3 so as to constitute the first controlled terminal of the voltage dropping unit 22, a controlled terminal of the third switching transistor Q3 is connected with a first end of the fifth resistance R5, and a second end of the fifth resistance R5 is the second controlled terminal of the voltage dropping unit 22, a high potential side of the fourth switching transistor Q4 is connected with the high potential side of the third switching transistor Q3, a controlled terminal of the fourth switching transistor Q4 is connected with a first end of the sixth resistance R6, a second end of the sixth resistance R6 is connected with the second end of the fifth resistance R5, a low potential side of the fourth switching transistor Q4 and a low potential side of the third switching transistor Q3 are commonly connected with a first end of the seventh resistance R7, and a second end of the seventh resistance R7 is grounded, a first end of the third diode D3 is connected with the high potential side of the fourth switching transistor Q4, a second end of the third diode D3 and the low potential side of the fourth switching transistor Q4 are commonly connected with a first end of the eighth resistance R8, and a second end of the eighth resistance R8 is grounded, a first end of the ninth capacitor C9 and a first end of the second inductance L2 are commonly connected with the first end of the third diode D3, the second end of the ninth capacitor C9 is connected with the first end of the ninth resistance R9, and a second end of the ninth resistance R9 is grounded, a second end of the second inductance L2 is connected with a first end of the tenth capacitor C10 so as to constitute the output of the voltage dropping unit 22, and a second end of the tenth capacitor C10 is grounded.

As an embodiment of the present invention, the first switching transistor Q1 and the second switching transistor Q2, the third switching transistor Q3 and the fourth switching transistor Q4 can all be triodes (Q1, Q2, Q3, Q4), MOS (Metal Oxide Semiconductor) transistors (Q1, Q2, Q3, Q4) or IGBTs (Insulated Gate Bipolar Transistors).

When the first switching transistor Q1, the second switching transistor Q2, the third switching transistor Q3 and the fourth switching transistor Q4 are all triodes (Q1, Q2, Q3, Q4), the base electrodes of these triode (Q1, Q2, Q3, Q4) are a controlled terminal of the first switching transistor Q1, a controlled terminal of the second switching transistor Q2, a controlled terminal of the third switching transistor Q3 and a controlled terminal of the fourth switching transistor Q4, respectively; the emitting electrodes of these triodes (Q1, Q2, Q3, Q4) are a low potential side of the first switching transistor Q1, a low potential side of the second switching transistor Q2, a low potential side of the third switching transistor Q3 and a low potential side of the fourth switching transistor Q4, respectively; the collection triodes of these triodes (Q1, Q2, Q3, Q4) are a high potential side of the first switching transistor Q1, a high potential side of the second switching transistor Q2, a high potential side of the third switching transistor Q3 and a high potential side of the fourth switching transistor Q4, respectively.

When the first switching transistor Q1 and the second switching transistor Q2, the third switching transistor Q3 and the fourth switching transistor Q4 are all MOS transistors (Q1, Q2, Q3, Q4), the gate electrodes of the MOS transistors (Q1, Q2, Q3, Q4) are the control terminal of the first switching transistor Q1, the control terminal of the second switching transistor Q2, the controlled terminal of the third switching transistor Q3 and the controlled terminal of the fourth switching transistor Q4, respectively; the source electrodes of these MOS transistors (Q1, Q2, Q3, Q4) are a low potential side of the first switching transistor Q1, a low potential side of the second switching transistor Q2, a low potential side of the third switching transistor Q3 and a low potential side of the fourth switching transistor Q4, respectively; the s drain electrodes of these MOS transistors (Q1, Q2, Q3, Q4) are a high potential side of the first switching transistor Q1, a high potential side of the second switching transistor Q2, a high potential side of the third switching transistor Q3 and a high potential side of the fourth switching transistor Q4, respectively.

When the first switching transistor Q1 and the second switching transistor Q2, the third switching transistor Q3 and the fourth switching transistor Q4 are all IGBT transistors (Q1, Q2, Q3, Q4), the gate electrodes of the IGBT transistors (Q1, Q2, Q3, Q4) are the control terminal of the first switching transistor Q1, the control terminal of the second switching transistor Q2, the controlled terminal of the third switching transistor Q3 and the controlled terminal of the fourth switching transistor Q4, respectively; the source electrodes of these MOS transistors (Q1, Q2, Q3, Q4) are a low potential side of the first switching transistor Q1, a low potential side of the second switching transistor Q2, a low potential side of the third switching transistor Q3 and a low potential side of the fourth switching transistor Q4, respectively; the collection electrodes of these MOS transistors (Q1, Q2, Q3, Q4) are a high potential side of the first switching transistor Q1, a high potential side of the second switching transistor Q2, a high potential side of the third switching transistor Q3 and a high potential side of the fourth switching transistor Q4, respectively. Further, the first switching transistor Q1, the second switching transistor Q2, the third switching transistor Q3 and the fourth switching transistor Q4 can all be IGBT transistors having body diodes.

FIG. 4 depicts a specific circuit diagram of a sampling unit 31 in a power connection device provided by the embodiment of the present invention, as shown in FIG. 4, the sampling unit 31 includes a first sampling resistor R11, a second sampling resistor R12 and a first chip U1.

A first end of the first sampling resistance R11 is connected with a first end of the second sampling resistance R12, a second end of the first sampling resistance R11 is connected with a second end of the second sampling resistance R12, a first voltage signal input IN+ of the first chip U1 is connected with the first end of the first sampling resistance R11, a second voltage signal input IN- of the first chip U1 is connected with the second end of the first sampling resistance R11, a reference voltage terminal VREF of the first chip U1 is grounded, and a voltage signal output VO of the first chip is connected with the first end of the tenth resistance R10, and the second end of the tenth resistance RIO is the output of the sampling unit 31.

The working principle of the power connection device of the present invention is described with reference to FIGS. 1-4. When the storage battery 200 is connected in at least two battery slots, the direct current output by the corresponding storage battery 200 is filtered by the filtering module 10 in each control circuit 110. As shown in FIG. 2, the first capacitor network composed of the first capacitor C1, the second capacitor C2 and the third capacitor C3, and a second capacitor network composed of the fourth capacitor C4 and the fifth capacitor C5 in the filtering module 10 has a differential mode rejection effect on the output voltage of the storage battery 200 collectively. The first inductance L1 is connected between the first capacitor network and the second capacitor network, and has a common mode rejection effect on the direct current as output by the storage battery 200.

In all embodiments of the present invention, the voltage dropping unit 22 is a buck converter. As shown in FIG. 3, the first direct current passes through the buck converter and then a second direct current is obtained, and the second direct current is output to the sampling unit 31 through a second end of the second inductance L2. As shown in FIG. 4, the first sampling resistor R11 and the second sampling resistor R12 are connected in parallel, when the second direct current is input into the sampling unit 31 through the first end of the first sampling resistor R11 and the first end of the second sampling resistor R12 respectively, collected voltage information is sent to the first chip U1 by the first sampling resistor R11 and the second sampling resistor R12, the voltage information is amplified by the first chip U1 according to the reference voltage, and the amplified voltage information is sent to the adjustment and output unit 32.

It needs to be noted that, in all embodiments of the present invention, the second input of the adjustment and output unit 32 is connected with the voltage dropping unit 22 in other control circuits 110 respectively and is used for collecting the second direct current in some other control circuits 110, when the storage battery 200 is connected in at least two battery slots, the adjustment and output unit 32 of the control circuit 110 connected with the storage battery 200 collects second direct currents in some other control circuits 110 connected with the storage battery 200, obtains and takes the voltage with the largest voltage value in all the second direct currents as the target voltage by comparison, and adjusts the output voltage according to the target voltage, thereby implementing outputting the same power supply current to the load 300.

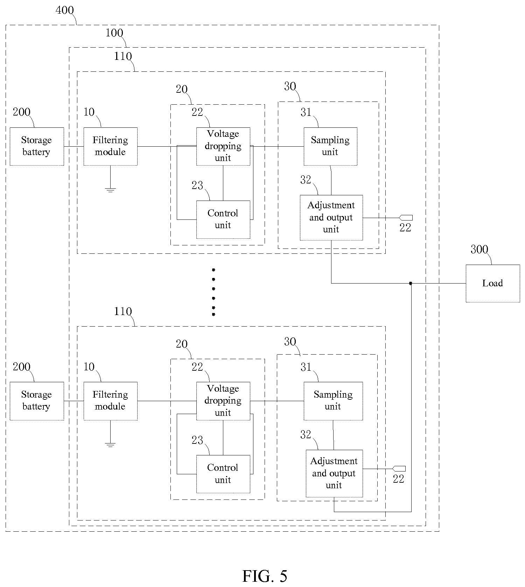

The embodiment of the present invention further provides a power control system, as shown in FIG. 5, the power control system 400 includes a storage battery 200 and a power connection device 100 as described above.

The implementation mode or the working principle involved in the power control system 400 is described in detail in the embodiments mentioned above, thus, it is not repeatedly described herein.

The present invention provides a power connection device which includes a plurality of battery slots configured to be connected with a storage battery, each battery slot is provided therein with a control circuit, an input of the control circuit is connected with a power terminal of the storage battery, an output of the control circuit is connected with a load, and the control circuit includes a filtering module, a voltage dropping module and a current equalizing module; where the current equalizing module includes a plurality of inputs; when the storage battery is connected in at least two battery slots, the direct current as output by the corresponding storage battery is filtered by the filtering module in each control circuit, and the first direct current is output to the voltage dropping module, a voltage dropping processing is performed on the first direct current by the voltage dropping module and the second direct current is output to the current equalizing module, the target voltage is generated by the current equalizing module in each control circuit according to the second direct currents in all control circuits, and the output voltage is adjusted by the current equalizing module in each control circuit according to the target voltage, so that the same supply current is output to the load. In this way, the output power of the power supply can be controlled by increasing or decreasing the number of the storage batteries on the power connection device when power consuming products with different power are provided with power supply, so that the research and development cycle of the product is further reduced.

## Claims

1. A power connection device (100) comprising a plurality of battery slots configured to be connected with a storage battery (200), each battery slot is provided therein with a control circuit (110), an input of the control circuit (110) is adapted to be connected with a power terminal of the storage battery (200), an output of the control circuit (110) is adapted to be connected with a load (300), the control circuit (110) comprises a filtering module (10), a voltage dropping module (20) and a current equalizing module (30); wherein the current equalizing module (30) comprises a first input and a second input;
a first end of the filtering module (10) is the input of the control circuit (110), a second end of the filtering module (10) is grounded, a third end of the filtering module (10) is connected with an input of the voltage dropping module (20), an output of the voltage dropping module (20) is connected with the first input of the current equalizing module (30), and an output of the current equalizing module (30) is the output of the control circuit (110);
when storage batteries (200) are connected in at least two battery slots, the filtering module (10) in each control circuit (110) is configured to filter output direct current of the corresponding storage battery (200), and output a first direct current to the voltage dropping module (20), the voltage dropping module (20) is configured to perform voltage dropping processing on the first direct current and output a second direct current to the current equalizing module (30), and the current equalizing module (30) in each control circuit (110) is configured to generate a target voltage according to the second direct currents in all control circuits (110) and adjust the output voltage according to the target voltage so as to output the same supply current to the load (300);
the voltage dropping module (20) comprises a control unit (21) and a voltage dropping unit (22);
a power terminal of the voltage dropping unit (22) is connected with a voltage input of the control unit (21), a first controlled terminal and a second controlled terminal of the voltage dropping unit (22) are respectively connected with a first control output and a second control output of the control unit (21), an input of the voltage dropping unit (22) is an input of the voltage dropping module (20), and an output of the voltage dropping unit (22) is an output of the voltage dropping module (20);
and wherein, the current equalizing module (30) comprises a sampling unit (31) and an adjustment and outputting unit (32), and the adjustment and outputting unit (32) comprises a first input and a second input;
an input of the sampling unit (31) is the first input of the current equalizing module (30), an output of the sampling unit (31) is connected with a first input of the adjustment and outputting unit (32), and a second input of the adjustment and output unit (32) is the second input of the current equalizing module (30);
the filtering module (10) comprises a first capacitor (C1), a second capacitor (C2), a third capacitor (C3), a fourth capacitor (C4), a fifth capacitor (C5) and a first inductance (LI);
a first end of the first capacitor (C1) and a first end of the second capacitor (C2) are commonly connected with a first end of the third capacitor (C3) so as to constitute the first end of the filtering module (10), a first end of the first inductance (L1) is connected with a first end of the third capacitor (C3), a second end of the first capacitor (C1), a second end of the second capacitor (C2) and a second end of the third capacitor (C3) are commonly connected with a second end of the first inductance (L1), a first end of the fourth capacitor (C4) and a first end of the fifth capacitor (C5) are commonly connected with a third end of the first inductance (L1), the third end of the first inductance (L1) is the third end of the filtering module (10), a second end of the fourth capacitor (C4) and a second end of the fifth capacitor (C5) are commonly connected with a fourth end of the first inductance (L1), and the fourth end of the first inductance (L1) is the second end of the filtering module (10).

2. The power connection device (100) according to claim 1, **characterized in that**, the voltage dropping unit (22) comprises a sixth capacitor (C6), a seventh capacitor (C7), an eighth capacitor (C8), a ninth capacitor (C9), a tenth capacitor (C10), a first resistance (R1), a second resistance (R2), a third resistance (R3), a fourth resistance (R4), a fifth resistance (R5), a sixth resistance (R6), a seventh resistance (R7), an eighth resistance (R8), a ninth resistance (R9), a second inductance (L2), a first diode (D1), a second diode (D2), a third diode (D3), a first switching transistor (Q1), a second switching transistor (Q2), a third switching transistor (Q3) and a fourth switching transistor (Q4);
wherein a first end of the sixth capacitor (C6) and a first end of the first diode (D1) are commonly connected with a high potential side of the first switching transistor (Q1), a second end of the sixth capacitor (C6) is connected with a first end of the first resistance (R1), a second end of the first resistance (R1) and the second end of the first diode (D1) are commonly connected with a low potential side of the first switching transistor (Q1), the high potential side of the first switching transistor (Q1), a high potential side of the second switching transistor (Q2) and a first end of the second diode (D2) are commonly connected with a first end of the seventh capacitor (C7), and the first end of the seventh capacitor (C7) is the input of the voltage dropping unit (22), a second end of the seventh capacitor (C7) is grounded, a second end of the second diode (D2) is connected with a first end of the fourth resistance (R4), a second end of the fourth resistance (R4) is connected with a first end of the eighth capacitor (C8), and a second end of the eighth capacitor (C8) is grounded, the first end of the eighth capacitor (C8) is the power terminal of the voltage dropping unit (22), the low potential side of the first switching transistor (Q1) and a low potential side of the second switching transistor (Q2) are commonly connected with a high potential side of the third switching transistor (Q3), a controlled terminal of the first switching transistor (Q1) is connected with a first end of the third resistance (R3), and a controlled terminal of the second switching transistor (Q2) is connected with a first end of the second resistance (R2), a second end of the second resistance (R2) is connected with a second end of the third resistance (R3) so as to constitute the first controlled terminal of the voltage dropping unit (22), a controlled terminal of the third switching transistor (Q3) is connected with a first end of the fifth resistance (R5), and a second end of the fifth resistance (R5) is the second controlled terminal of the voltage dropping unit (22), a high potential side of the fourth switching transistor (Q4) is connected with the high potential side of the third switching transistor (Q3), a controlled terminal of the fourth switching transistor (Q4) is connected with a first end of the sixth resistance (R6), a second end of the sixth resistance (R6) is connected with the second end of the fifth resistance (R5), a low potential side of the fourth switching transistor (Q4) and a low potential side of the third switching transistor (Q3) are commonly connected with a first end of the seventh resistance (R7), and a second end of the seventh resistance (R7) is grounded, a first end of the third diode (D3) is connected with the high potential side of the fourth switching transistor (Q4), a second end of the third diode (D3) and the low potential side of the fourth switching transistor (Q4) are commonly connected with a first end of the eighth resistance (R8), and a second end of the eighth resistance (R8) is grounded, a first end of the ninth capacitor (C9) and a first end of the second inductance (L2) are commonly connected with the first end of the third diode (D3), the second end of the ninth capacitor (C9) is connected with the first end of the ninth resistance (R9), and a second end of the ninth resistance (R9) is grounded, a second end of the second inductance (L2) is connected with a first end of the tenth capacitor (C10) so as to constitute the output of the voltage dropping unit (22), and a second end of the tenth capacitor (C10) is grounded.

3. The power connection device (100) according to claim 1, **characterized in that**, the sampling unit (31) comprises a first sampling resistance (R11), a second sampling resistance (R12) and a first chip (U1);
wherein a first end of the first sampling resistance (R11) is connected with a first end of the second sampling resistance (R12), a second end of the first sampling resistance (R11) is connected with a second end of the second sampling resistance (R12), a first voltage signal input of the first chip (U1) is connected with the first end of the first sampling resistance (R11), a second voltage signal input of the first chip (U1) is connected with the second end of the first sampling resistance (R12), a reference voltage terminal of the first chip (U1) is grounded, and a voltage signal output of the first chip (U1) is connected with the first end of the tenth resistance (R10), and the second end of the tenth resistance (R10) is the output of the sampling unit (31).

4. The power connection device (100) according to claim 2, **characterized in that**, each of the first switching transistor (Q1), the second switching transistor (Q2), the third switching transistor (Q3) and the fourth switching transistor (Q4) is a triode, an MOS transistor or an IGBT transistor.

5. The power connection device (100) according to claim 4, **characterized in that**, each of the first switching transistor (Q1), the second switching transistor (Q2), the third switching transistor (Q3), and the fourth switching transistor (Q4) is an IGBT transistor having a body diode.

6. A power control system (400) which comprises a storage battery (200), **characterized in that**, the power control system (400) further comprises a power connection device (100) according to any one of claims 1 to 5.

## Patentansprüche

1. Leistungsverbindungsvorrichtung (100), umfassend eine Vielzahl von Batterieschlitzen, die konfiguriert sind, um mit einer Speicherbatterie (200) verbunden zu sein, wobei jeder Batterieschlitz darin mit einer Steuerschaltung (110) bereitgestellt ist, wobei ein Eingang der Steuerschaltung (110) ausgelegt ist, um mit einem Leistungsanschluss der Speicherbatterie (200) verbunden zu sein, wobei ein Ausgang der Steuerschaltung (110) ausgelegt ist, um mit einer Last (300) verbunden zu sein, wobei die Steuerschaltung (110) ein Filtermodul (10), ein Spannungsabfallmodul (20) und ein Stromausgleichsmodul (30) umfasst; wobei das Stromausgleichsmodul (30) einen ersten Eingang und einen zweiten Eingang umfasst;
wobei ein erstes Ende des Filtermoduls (10) der Eingang der Steuerschaltung (110) ist, ein zweites Ende des Filtermoduls (10) geerdet ist, ein drittes Ende des Filtermoduls (10) mit einem Eingang des Spannungsabfallmoduls (20) verbunden ist, ein Ausgang des Spannungsabfallmoduls (20) mit dem ersten Eingang des Stromausgleichsmoduls (30) verbunden ist und ein Ausgang des Stromausgleichsmoduls (30) der Ausgang der Steuerschaltung (110) ist;
wobei, wenn Speicherbatterien (200) in zumindest zwei Batterieschlitzen verbunden sind, das Filtermodul (10) in jeder Steuerschaltung (110) konfiguriert ist, um Ausgangsgleichstrom der entsprechenden Speicherbatterie (200) zu filtern und einen ersten Gleichstrom an das Spannungsabfallmodul (20) auszugeben, wobei das Spannungsabfallmodul (20) konfiguriert ist, um Spannungsabfallverarbeitung an dem ersten Gleichstrom durchzuführen und einen zweiten Gleichstrom an das Stromausgleichsmodul (30) auszugeben und das Stromausgleichsmodul (30) in jeder Steuerschaltung (110) konfiguriert ist, um eine Zielspannung gemäß den zweiten Gleichströmen in allen Steuerschaltungen (110) zu erzeugen und die Ausgangsspannung gemäß der Zielspannung anzupassen, um den gleichen Versorgungsstrom an die Last (300) auszugeben;
wobei das Spannungsabfallmodul (20) eine Steuereinheit (21) und eine Spannungsabfalleinheit (22) umfasst;
wobei ein Leistungsanschluss der Spannungsabfalleinheit (22) mit einem Spannungseingang der Steuereinheit (21) verbunden ist, ein erster gesteuerter Anschluss und ein zweiter gesteuerter Anschluss der Spannungsabfalleinheit (22) jeweils mit einem ersten Steuerausgang und einem zweiten Steuerausgang der Steuereinheit (21) verbunden sind, ein Eingang der Spannungsabfalleinheit (22) ein Eingang des Spannungsabfallmoduls (20) ist und ein Ausgang der Spannungsabfalleinheit (22) ein Ausgang des Spannungsabfallmoduls (20) ist;
und wobei das Stromausgleichsmodul (30) eine Abtasteinheit (31) und eine Anpassungs- und Ausgangseinheit (32) umfasst und die Anpassungs- und Ausgangseinheit (32) einen ersten Eingang und einen zweiten Eingang umfasst;
wobei ein Eingang der Abtasteinheit (31) der erste Eingang des Stromausgleichsmoduls (30) ist, ein Ausgang der Abtasteinheit (31) mit einem ersten Eingang der Anpassungs- und Ausgangseinheit (32) verbunden ist und ein zweiter Eingang der Anpassungs- und Ausgangseinheit (32) der zweite Eingang des Stromausgleichsmoduls (30) ist;
wobei das Filtermodul (10) einen ersten Kondensator (C1), einen zweiten Kondensator (C2), einen dritten Kondensator (C3), einen vierten Kondensator (C4), einen fünften Kondensator (C5) und eine erste Induktivität (L1) umfasst;
wobei ein erstes Ende des ersten Kondensators (C1) und ein erstes Ende des zweiten Kondensators (C2) gemeinsam mit einem ersten Ende des dritten Kondensators (C3) verbunden sind, um das erste Ende des Filtermoduls (10) zu bilden, ein erstes Ende der ersten Induktivität (L1) mit einem ersten Ende des dritten Kondensators (C3) verbunden ist, ein zweites Ende des ersten Kondensators (C1), ein zweites Ende des zweiten Kondensators (C2) und ein zweites Ende des dritten Kondensators (C3) gemeinsam mit einem zweiten Ende der ersten Induktivität (L1) verbunden sind, ein erstes Ende des vierten Kondensators (C4) und ein erstes Ende des fünften Kondensators (C5) gemeinsam mit einem dritten Ende der ersten Induktivität (L1) verbunden sind, das dritte Ende der ersten Induktivität (L1) das dritte Ende des Filtermoduls (10) ist, ein zweites Ende des vierten Kondensators (C4) und ein zweites Ende des fünften Kondensators (C5) gemeinsam mit einem vierten Ende der ersten Induktivität (L1) verbunden sind und das vierte Ende der ersten Induktivität (L1) das zweite Ende des Filtermoduls (10) ist.

2. Leistungsverbindungsvorrichtung (100) nach Anspruch 1, **dadurch gekennzeichnet, dass** die Spannungsabfalleinheit (22) einen sechsten Kondensator (C6), einen siebten Kondensator (C7), einen achten Kondensator (C8), einen neunten Kondensator (C9), einen zehnten Kondensator (C10), einen ersten Widerstand (R1), einen zweiten Widerstand (R2), einen dritten Widerstand (R3), einen vierten Widerstand (R4), einen fünften Widerstand (R5), einen sechsten Widerstand (R6), einen siebten Widerstand (R7), einen achten Widerstand (R8), einen neunten Widerstand (R9), eine zweite Induktivität (L2), eine erste Diode (D1), eine zweite Diode (D2), eine dritte Diode (D3), einen ersten Schalttransistor (Q1), einen zweiten Schalttransistor (Q2), einen dritten Schalttransistor (Q3) und einen vierten Schalttransistor (Q4) umfasst;
wobei ein erstes Ende des sechsten Kondensators (C6) und ein erstes Ende der ersten Diode (D1) gemeinsam mit einer Hochpotentialseite des ersten Schalttransistors (Q1) verbunden sind, ein zweites Ende des sechsten Kondensators (C6) mit einem ersten Ende des ersten Widerstands (R1) verbunden ist, ein zweites Ende des ersten Widerstands (R1) und das zweite Ende der ersten Diode (D1) gemeinsam mit einer Niederpotentialseite des ersten Schalttransistors (Q1) verbunden sind, die Hochpotentialseite des ersten Schalttransistors (Q1), eine Hochpotentialseite des zweiten Schalttransistors (Q2) und ein erstes Ende der zweiten Diode (D2) gemeinsam mit einem ersten Ende des siebten Kondensators (C7) verbunden sind und das erste Ende des siebten Kondensators (C7) der Eingang der Spannungsabfalleinheit (22) ist, ein zweites Ende des siebten Kondensators (C7) geerdet ist, ein zweites Ende der zweiten Diode (D2) mit einem ersten Ende des vierten Widerstands (R4) verbunden ist, ein zweites Ende des vierten Widerstands (R4) mit einem ersten Ende des achten Kondensators (C8) verbunden ist und ein zweites Ende des achten Kondensators (C8) geerdet ist, das erste Ende des achten Kondensators (C8) der Leistungsanschluss der Spannungsabfalleinheit (22) ist, die Niederpotentialseite des ersten Schalttransistors (Q1) und eine Niederpotentialseite des zweiten Schalttransistors (Q2) gemeinsam mit einer Hochpotentialseite des dritten Schalttransistors (Q3) verbunden sind, ein gesteuerter Anschluss des ersten Schalttransistors (Q1) mit einem ersten Ende des dritten Widerstands (R3) verbunden ist und ein gesteuerter Anschluss des zweiten Schalttransistors (Q2) mit einem ersten Ende des zweiten Widerstands (R2) verbunden ist, ein zweites Ende des zweiten Widerstands (R2) mit einem zweiten Ende des dritten Widerstands (R3) verbunden ist, um den ersten gesteuerten Anschluss der Spannungsabfalleinheit (22) zu bilden, ein gesteuerter Anschluss des dritten Schalttransistors (Q3) mit einem ersten Ende des fünften Widerstands (R5) verbunden ist und ein zweites Ende des fünften Widerstands (R5) der zweite gesteuerte Anschluss der Spannungsabfalleinheit (22) ist, eine Hochpotentialseite des vierten Schalttransistors (Q4) mit der Hochpotentialseite des dritten Schalttransistors (Q3) verbunden ist, ein gesteuerter Anschluss des vierten Schalttransistors (Q4) mit einem ersten Ende des sechsten Widerstands (R6) verbunden ist, ein zweites Ende des sechsten Widerstands (R6) mit dem zweiten Ende des fünften Widerstands (R5) verbunden ist, eine Niederpotentialseite des vierten Schalttransistors (Q4) und eine Niederpotentialseite des dritten Schalttransistors (Q3) gemeinsam mit einem ersten Ende des siebten Widerstands (R7) verbunden sind und ein zweites Ende des siebten Widerstands (R7) geerdet ist, ein erstes Ende der dritten Diode (D3) mit der Hochpotentialseite des vierten Schalttransistors (Q4) verbunden ist, ein zweites Ende der dritten Diode (D3) und die Niederpotentialseite des vierten Schalttransistors (Q4) gemeinsam mit einem ersten Ende des achten Widerstands (R8) verbunden sind und ein zweites Ende des achten Widerstands (R8) geerdet ist, ein erstes Ende des neunten Kondensators (C9) und ein erstes Ende der zweiten Induktivität (L2) gemeinsam mit dem ersten Ende der dritten Diode (D3) verbunden sind, das zweite Ende des neunten Kondensators (C9) mit dem ersten Ende des neunten Widerstands (R9) verbunden ist und ein zweites Ende des neunten Widerstands (R9) geerdet ist, ein zweites Ende der zweiten Induktivität (L2) mit einem ersten Ende des zehnten Kondensators (C10) verbunden ist, um den Ausgang der Spannungsabfalleinheit (22) zu bilden und ein zweites Ende des zehnten Kondensators (C10) geerdet ist.

3. Leistungsverbindungsvorrichtung (100) nach Anspruch 1, **dadurch gekennzeichnet, dass** die Abtasteinheit (31) einen ersten Abtastwiderstand (R11), einen zweiten Abtastwiderstand (R12) und einen ersten Chip (U1) umfasst;
wobei ein erstes Ende des ersten Abtastwiderstands (R11) mit einem ersten Ende des zweiten Abtastwiderstands (R12) verbunden ist, ein zweites Ende des ersten Abtastwiderstands (R11) mit einem zweiten Ende des zweiten Abtastwiderstands (R12) verbunden ist, ein erster Spannungssignaleingang des ersten Chips (U1) mit dem ersten Ende des ersten Abtastwiderstands (R11) verbunden ist, ein zweiter Spannungssignaleingang des ersten Chips (U1) mit dem zweiten Ende des ersten Abtastwiderstands (R12) verbunden ist, ein Referenzspannungsanschluss des ersten Chips (U1) geerdet ist und ein Spannungssignalausgang des ersten Chips (U1) mit dem ersten Ende des zehnten Widerstands (R10) verbunden ist und das zweite Ende des zehnten Widerstands (R10) der Ausgang der Abtasteinheit (31) ist.

4. Leistungsverbindungsvorrichtung (100) nach Anspruch 2, **dadurch gekennzeichnet, dass** jeder von dem ersten Schalttransistor (Q1), dem zweiten Schalttransistor (Q2), dem dritten Schalttransistor (Q3) und dem vierten Schalttransistor (Q4) eine Triode, ein MOS-Transistor oder ein IGBT-Transistor ist.

5. Leistungsverbindungsvorrichtung (100) nach Anspruch 4, **dadurch gekennzeichnet, dass** jeder von dem ersten Schalttransistor (Q1), dem zweiten Schalttransistor (Q2), dem dritten Schalttransistor (Q3) und dem vierten Schalttransistor (Q4) ein IGBT-Transistor ist, der eine Körperdiode aufweist.

6. Leistungssteuersystem (400), das eine Speicherbatterie (200) umfasst, **dadurch gekennzeichnet, dass** das Leistungssteuersystem (400) ferner eine Leistungsverbindungsvorrichtung (100) nach einem der Ansprüche 1 bis 5 umfasst.

## Revendications

1. Dispositif de connexion de source d'énergie (100) comprenant une pluralité d'emplacements pour batterie configurés pour être connectés à une batterie de stockage (200), chaque emplacement pour batterie est doté d'un circuit de commande (110) dans celui-ci, une entrée du circuit de commande (110) est adaptée pour être connectée à une borne de source d'énergie de la batterie de stockage (200), une sortie du circuit de commande (110) est adaptée pour être connectée à une charge (300),
le circuit de commande (110) comprend un module de filtrage (10), un module de diminution de tension (20) et un module d'égalisation de courant (30) ; ledit module d'égalisation de courant (30) comprenant une première entrée et une seconde entrée ;
une première extrémité du module de filtrage (10) est l'entrée du circuit de commande (110), une deuxième extrémité du module de filtrage (10) est mise à la terre, une troisième extrémité du module de filtrage (10) est connectée à une entrée du module de diminution de tension (20), une sortie du module de diminution de tension (20) est connectée à la première entrée du module d'égalisation de courant (30), et une sortie du module d'égalisation de courant (30) est la sortie du circuit de commande (110) ;
lorsque des batteries de stockage (200) sont connectées dans au moins deux emplacements de batterie, le module de filtrage (10) dans chaque circuit de commande (110) est configuré pour filtrer le courant continu de sortie de la batterie de stockage correspondante (200), et délivrer en sortie un premier courant continu au module de diminution de tension (20), le module de diminution de tension (20) est configuré pour réaliser un traitement de diminution de tension sur le premier courant continu et délivrer en sortie un second courant continu au module d'égalisation de courant (30), et le module d'égalisation de courant (30) dans chaque circuit de commande (110) est configuré pour générer une tension cible selon les seconds courants continus dans tous les circuits de commande (110) et régler la tension de sortie selon la tension cible de façon à délivrer en sortie le même courant d'alimentation à la charge (300) ;
le module de diminution de tension (20) comprend une unité de commande (21) et une unité de diminution de tension (22) ;
une borne de puissance de l'unité de diminution de tension (22) est connectée à une entrée de tension de l'unité de commande (21), une première borne commandée et une seconde borne commandée de l'unité de diminution de tension (22) sont respectivement connectées à une première sortie de commande et une seconde sortie de commande de l'unité de commande (21), une entrée de l'unité de diminution de tension (22) est une entrée du module de diminution de tension (20), et une sortie de l'unité de diminution de tension (22) est une sortie du module de diminution de tension (20) ;
et
ledit module d'égalisation de courant (30) comprenant une unité d'échantillonnage (31) et une unité de réglage et de sortie (32), et ladite unité de réglage et de sortie (32) comprenant une première entrée et une seconde entrée ;
une entrée de l'unité d'échantillonnage (31) étant la première entrée du module d'égalisation de courant (30), une sortie de l'unité d'échantillonnage (31) étant connectée à une première entrée de l'unité de réglage et de sortie (32), et une seconde entrée de l'unité de réglage et de sortie (32) étant la seconde entrée du module d'égalisation de courant (30) ;
ledit module de filtrage (10) comprenant un premier condensateur (C1), un deuxième condensateur (C2), un troisième condensateur (C3), un quatrième condensateur (C4), un cinquième condensateur (C5) et une première inductance (L1) ;
une première extrémité du premier condensateur (C1) et une première extrémité du deuxième condensateur (C2) étant généralement connectées à une première extrémité du troisième condensateur (C3) de façon à constituer la première extrémité du module de filtrage (10), une première extrémité de la première inductance (L1) étant connectée à une première extrémité du troisième condensateur (C3), une seconde extrémité du premier condensateur (C1), une seconde extrémité du deuxième condensateur (C2) et une seconde extrémité du troisième condensateur (C3) étant généralement connectées à une deuxième extrémité de la première inductance (L1), une première extrémité du quatrième condensateur (C4) et une première extrémité du cinquième condensateur (C5) étant généralement connectées à une troisième extrémité de la première inductance (L1), ladite troisième extrémité de la première inductance (L1) étant la troisième extrémité du module de filtrage (10), une deuxième extrémité du quatrième condensateur (C4) et une deuxième extrémité du cinquième condensateur (C5) sont généralement connectées à une quatrième extrémité de la première inductance (L1), et ladite quatrième extrémité de la première inductance (L1) étant la deuxième extrémité du module de filtrage (10).

2. Dispositif de connexion de source d'énergie (100) selon la revendication 1, **caractérisé en ce que** l'unité de diminution de tension (22) comprend un sixième condensateur (C6), un septième condensateur (C7), un huitième condensateur (C8), un neuvième condensateur (C9), un dixième condensateur (C10), une première résistance (R1), une deuxième résistance (R2), une troisième résistance (R3), une quatrième résistance (R4), une cinquième résistance (R5), une sixième résistance (R6), une septième résistance (R7), une huitième résistance (R8), une neuvième résistance (R9), une seconde inductance (L2), une première diode (D1), une deuxième diode (D2), une troisième diode (D3), un premier transistor de commutation (Q1), un deuxième transistor de commutation (Q2), un troisième transistor de commutation (Q3) et un quatrième transistor de commutation (Q4) ;
une première extrémité du sixième condensateur (C6) et une première extrémité de la première diode (D1) étant généralement connectées à un côté à potentiel élevé du premier transistor de commutation (Q1), une seconde extrémité du sixième condensateur (C6) étant connectée à une première extrémité de la première résistance (R1), une seconde extrémité de la première résistance (R1) et ladite seconde extrémité de la première diode (D1) étant généralement connectées à un côté à faible potentiel du premier transistor de commutation (Q1), le côté à potentiel élevé du premier transistor de commutation (Q1), un côté à potentiel élevé du deuxième transistor de commutation (Q2) et une première extrémité de la deuxième diode (D2) étant généralement connectés à une première extrémité du septième condensateur (C7), et ladite première extrémité du septième condensateur (C7) étant l'entrée de l'unité de diminution de tension (22), une seconde extrémité du septième condensateur (C7) étant mise à la terre, une seconde extrémité de la deuxième diode (D2) étant connectée à une première extrémité de la quatrième résistance (R4), une seconde extrémité de la quatrième résistance (R4) étant connectée avec une première extrémité du huitième condensateur (C8) et une seconde extrémité du huitième condensateur (C8) étant mise à la terre, la première extrémité du huitième condensateur (C8) étant la borne de puissance de l'unité de diminution de tension (22), le côté à faible potentiel du premier transistor de commutation (Q1) et un côté à faible potentiel du deuxième transistor de commutation (Q2) étant généralement connectés avec un côté à potentiel élevé du troisième transistor de commutation (Q3), une borne commandée du premier transistor de commutation (Q1) étant connectée à une première extrémité de la troisième résistance (R3), et une borne commandée du deuxième transistor de commutation (Q2) étant connectée à une première extrémité de la deuxième résistance (R2), une seconde extrémité de la deuxième résistance (R2) étant connectée à une seconde extrémité de la troisième résistance (R3) de façon à constituer la première borne commandée de l'unité de diminution de tension (22), une borne commandée du troisième transistor de commutation (Q3) étant connectée avec une première extrémité de la cinquième résistance (R5), et une seconde extrémité de la cinquième résistance (R5) étant la seconde borne commandée de l'unité de diminution de tension (22), un côté à potentiel élevé du quatrième transistor de commutation (Q4) étant connecté au côté à potentiel élevé du troisième transistor de commutation (Q3), une borne commandée du quatrième transistor de commutation (Q4) étant connectée à une première extrémité de la sixième résistance (R6), une seconde extrémité de la sixième résistance (R6) étant connectée avec la seconde extrémité de la cinquième résistance (R5), un côté à faible potentiel du quatrième transistor de commutation (Q4) et un côté à faible potentiel du troisième transistor de commutation (Q3) étant généralement connectés avec une première extrémité de la septième résistance (R7), et une seconde extrémité de la septième résistance (R7) étant mise à la terre, une première extrémité de la troisième diode (D3) étant connectée au côté à potentiel élevé du quatrième transistor de commutation (Q4), une seconde extrémité de la troisième diode (D3) et le côté à faible potentiel du quatrième transistor de commutation (Q4) étant généralement connectés à une première extrémité de la huitième résistance (R8), et une seconde extrémité de la huitième résistance (R8) étant mise à la terre, une première extrémité du neuvième condensateur (C9) et une première extrémité de la seconde inductance (L2) étant généralement connectées à la première extrémité de la troisième diode (D3), la seconde extrémité du neuvième condensateur (C9) étant connectée à la première extrémité de la neuvième résistance (R9), et une seconde extrémité de la neuvième résistance (R9) étant mise à la terre, une seconde extrémité de la seconde inductance (L2) étant connectée à une première extrémité du dixième condensateur (C10) de façon à constituer la sortie de l'unité de diminution de tension (22), et une seconde extrémité du dixième condensateur (C10) étant mise à la terre.

3. Dispositif de connexion de source d'énergie (100) selon la revendication 1, **caractérisé en ce que** l'unité d'échantillonnage (31) comprend une première résistance d'échantillonnage (R11), une seconde résistance d'échantillonnage (R12) et une première puce (U1) ;
une première extrémité de la première résistance d'échantillonnage (R11) étant connectée à une première extrémité de la seconde résistance d'échantillonnage (R12), une seconde extrémité de la première résistance d'échantillonnage (R11) étant connectée à une seconde extrémité de la seconde résistance d'échantillonnage (R12), une première entrée de signal de tension de la première puce (U1) étant connectée à la première extrémité de la première résistance d'échantillonnage (R11), une seconde entrée de signal de tension de la première puce (U1) étant connectée à la seconde extrémité de la première résistance d'échantillonnage (R12), une borne de tension de référence de la première puce (U1) étant mise à la terre, et une sortie de signal de tension de la première puce (U1) étant connectée à la première extrémité de la dixième résistance (R10), et ladite seconde extrémité de la dixième résistance (R10) étant la sortie de l'unité d'échantillonnage (31).

4. Dispositif de connexion de source d'énergie (100) selon la revendication 2, **caractérisé en ce que** chacun du premier transistor de commutation (Q1), du deuxième transistor de commutation (Q2), du troisième transistor de commutation (Q3) et du quatrième transistor de commutation (Q4) est une triode, un transistor MOS ou un transistor IGBT.

5. Dispositif de connexion de source d'énergie (100) selon la revendication 4, **caractérisé en ce que** chacun du premier transistor de commutation (Q1), du deuxième transistor de commutation (Q2), du troisième transistor de commutation (Q3) et du quatrième transistor de commutation (Q4) est un transistor IGBT possédant une diode de corps.

6. Système de commande de puissance (400) qui comprend une batterie de stockage (200), **caractérisé en ce que** le système de commande de puissance (400) comprend en outre un dispositif de connexion de source d'énergie (100) selon l'une quelconque des revendications 1 à 5.
